# EUROPÄISCHE PATENTSCHRIFT

(11) **EP 1 018 229 B1**
(45) Veröffentlichungstag und Bekanntmachung des Hinweises auf die Patenterteilung: **30.10.2002**
(21) Anmeldenummer: 98922605.5
(22) Anmeldetag: 14.03.1998
(51) Int. Cl.: H04B 10/17, H04B 10/08, H04B 10/24

(54) **ANORDNUNG ZUR ÜBERTRAGUNG OPTISCHER SIGNALE UND ÜBERWACHUNGSSIGNALE**
DEVICE FOR TRANSMISSION OF OPTICAL SIGNALS AND MONITORING SIGNALS
DISPOSITIF DE TRANSMISSION DE SIGNAUX OPTIQUES ET DE SIGNAUX DE SURVEILLANCE

(30) Priorität: 23.09.1997 DE 19741851
(43) Veröffentlichungstag der Anmeldung: 12.07.2000
(73) Patentinhaber: ROBERT BOSCH GMBH, 70442 Stuttgart (DE)
(72) Erfinder: KREMERS, Ernst, D-71540 Murrhardt (DE); TISCHER, Friedrich-Christian, D-71522 Backnang (DE)
(74) Vertreter: Camp, Ronald
(86) Internationale Anmeldenummer: DE9800765
(87) Internationale Veröffentlichungsnummer: WO99016194

(56) Entgegenhaltungen:
- EP-A- 0 449 475
- WO-A-95/15625
- DE-A- 4 421 441
- GB-A- 2 207 827

## Beschreibung

Die Erfindung betrifft eine Anordnung zur Übertragung optischer Signale mit einer optischen Übertragungsstrecke mit den im Oberbegriff des Anspruchs 1 genannten Merkmalen.

### Stand der Technik

Anordnungen der gattungsgemäßen Art sind bekannt. Hierbei werden über eine optische Übertragungsstrecke, die beispielsweise von festverlegten Lichtwellenleitern gebildet sein kann, optische Signale übertragen. An den Enden der optischen Übertragungsstrecke sind jeweils optische Sender und/oder optische Empfänger angeordnet. Hierbei kann eine Übertragung optischer Signale entweder in einer Richtung oder bidirektional erfolgen. Bekannt ist eine Übertragung optischer Signale in einem Wellenlängenmultiplex, bei der mehrere optische Kanäle innerhalb eines gemeinsamen Wellenlängenbereiches übertragen werden.

Um eine Dämpfung der übertragenen optischen Signale durch die Übertragungsstrecke zu kompensieren, ist es bekannt, in die optische Übertragungsstrecke wenigstens eine Verstärkereinrichtung zu integrieren. Mittels dieser optischen Verstärkereinrichtung wird der Pegel der übertragenen optischen Signale, zumindest zum Ausgleich der Dämpfung der Übertragungsstrecke, angehoben. Eine solche Verstärkereinrichtung verstärkt üblicherweise nur in einer Richtung.

Zur Überwachung der Übertragungsstrecke und der Verstärkereinrichtung ist bekannt, auf der Übertragungsstrecke ein von den optischen Signalen getrenntes Überwachungssignal zu übertragen. Dieses wird auf einem separaten Übertragungskanal übertragen, der nicht zur Übertragung der optischen Signale dient.

Es wird zwischen einer sogenannten Inband-Übertragung und einer sogenannten Außerband-Übertragung des Überwachungssignales unterschieden. Bei einer Inband-Übertragung liegt der Übertragungskanal des Überwachungssignales in dem Wellenlängenbereich der optischen Kanäle zur Übertragung der optischen Signale. Bei der Außerband-Übertragung liegt der Übertragungskanal des Überwachungssignales außerhalb des Wellenlängenbereiches der optischen Kanäle der optischen Signale.

Die Überwachungssignale werden parallel zu den optischen Signalen in der gleichen Richtung übertragen. Bei der Inband-Übertragung ist nachteilig, daß bei Ausfall der zu überwachenden Verstärkereinrichtung, der auf die Übertragungskanäle der zu übertragenen optischen Signale ausgelegt ist, gleichzeitig der Überwachungskanal für das Überwachungssignal mit unterbrochen wird. Somit ist gerade im Fehlerfalle ein Empfang des Überwachungssignales nicht möglich, so daß eine Lokalisierung eines Fehlerortes ausgeschlossen ist. Bei der Außerband-Übertragung ist nachteilig, daß optische Bauelemente, sowohl als Sender und Empfänger sowie in Eingangs- beziehungsweise Ausgangsfiltern eingesetzt werden müssen, die in einem Wellenlängenbereich arbeiten, der nicht in den üblichen, standardisierten Wellenlängenbereichen zur Übertragung optischer Signale liegt. Derartige optische Elemente sind somit relativ teuer.

### Vorteile der Erfindung

Die erfindungsgemäße Anordnung mit den im Anspruch 1 genannten Merkmalen bietet demgegenüber den Vorteil, daß in einfacher Weise die Übertragung eines Überwachungssignales möglich ist, das auch bei Ausfall einer Verstärkereinrichtung der Übertragungsstrecke empfangbar ist. Dadurch, daß das Überwachungssignal in einem Wellenlängenbereich der zu übertragenden optischen Signale in entgegengesetzter Richtung zu den optischen Signalen übertragen wird, können in vorteilhafter Weise einerseits zum Senden und Empfangen beziehungsweise Einkoppeln und Trennen des Überwachungssignales übliche standardisierte Bauelemente verwendet werden, die zum Übertragen der optischen Signale Verwendung finden. Andererseits übt durch die zur Übertragung der optischen Signale entgegengesetzten Übertragungsrichtung des Überwachungssignales ein Ausfall der Verstärkereinrichtung keinen Einfluß auf die Übertragung des Überwachungssignales aus, da die Verstärkereinrichtung nur in Richtung der zu übertragenden optischen Signale verstärkt und in entgegengesetzter Richtung als Isolator wirkt. Insgesamt können somit die Vorteile einer Inband-Übertragung und einer Außerband-Übertragung gemeinsam genutzt werden.

Weitere vorteilhafte Ausgestaltungen der Erfindung ergeben sich aus den übrigen, in den Unteransprüchen genannten Merkmalen.

### Zeichnung

Die Erfindung wird nachfolgend in einem Ausführungsbeispiel anhand der zugehörigen Zeichnung, die eine optische Übertragungsstrecke zeigt, näher erläutert.

### Beschreibung des Ausführungsbeispiels

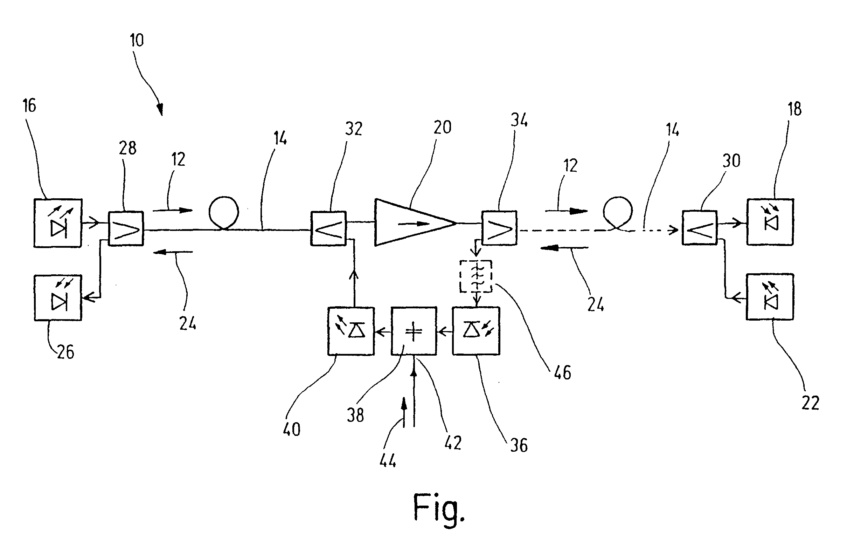

In der Figur ist eine Anordnung 10 zur Übertragung optischer Signale 12 gezeigt. Die optischen Signale 12 werden über eine optische Übertragungsstrecke 14 übertragen. Die Übertragungsstrecke 14 wird beispielsweise von einem fest verlegten Lichtwellenleiter, beispielsweise einem Glasfaserkabel, gebildet.

Im gezeigten Beispiel wird davon ausgegangen, daß die Übertragung der optischen Signale 12 lediglich in eine Richtung, gemäß der Darstellung von links nach rechts, erfolgt. Selbstverständlich ist nach anderen Ausführungsbeispielen auch eine bidirektionale Übertragung der optischen Signale 12 möglich, wobei die gesamte Anordnung 10 dann für beide Richtungen je einmal vorgesehen ist.

An einem Ende, in der Figur links, ist ein optischer Sender 16 zur Übertragung der optischen Signale 12 angeordnet. Am anderen Ende der Übertragungsstrecke 14, in der Figur rechts, ist ein optischer Empfänger 18 zum Empfang der optischen Signale 12 angeordnet. Die optischen Signale 12 werden vorzugsweise in einem Wellenlängenmultiplex (WDM) übertragen, das heißt, mehrere Kanäle zur Übertragung optischer Signale 12 werden in einem gemeinsamen Wellenlängenbereich, der beispielsweise 1530 bis 1565 nm beträgt, übertragen.

In die optische Übertragungsstrecke 14 ist eine nur in einer Übertragungsrichtung wirkende optische verstärkereinrichtung 20, beispielsweise ein optischer Faserverstärker (OFA - optical fibre amplifier) eingeschleift. Mittels der Verstärkereinrichtung 20 wird eine Dämpfung der optischen Signale 12, die sich aufgrund der Übertragung über die Übertragungsstrecke 14 von dem optischen Sender 16 bis zur Verstärkereinrichtung 20 ergeben, kompensiert. Der Pegel der optischen Signale 12 wird hierbei entsprechend der Dämpfung angehoben. Die Verstärkereinrichtung 20 kann entweder unmittelbar vor dem optischen Empfänger 18 angeordnet sein, oder diese ist, wie durch die gestrichelte Darstellung der Übertragungsstrecke 14 zwischen der Verstärkereinrichtung 20 und dem optischen Empfänger 18 angedeutet ist, beispielsweise auf halber Weglänge zwischen dem optischen Sender 16 und dem optischen Empfänger 18 angeordnet. Nach weiteren Ausführungsbeispielen ist die Anordnung mehrerer solcher optischer Verstärkereinrichtungen 20 innerhalb der optischen Übertragungsstrecke 14 möglich.

Die Anordnung 10 umfaßt ferner einen optischen Sender 22 zum Senden eines Überwachungssignales 24 sowie einen optischen Empfänger 26 zum Empfangen des Überwachungssignales 24. Der Sender 22 ist hierbei an dem Ende der Übertragungsstrecke 14 angeordnet, an dem der optische Empfänger 18 für die optischen Signale 12 angeordnet ist, während der optische Empfänger 26 an dem Ende der Übertragungsstrecke 14 angeordnet ist, an dem der optische Sender 16 zur Übertragung der optischen Signale 12 angeordnet ist. Die Übertragung des Überwachungssignales 24 erfolgt somit gegenläufig zu der Übertragung der optischen Signale 12, das heißt, in entgegengesetzter Richtung.

Der optische Sender 16 und der optische Empfänger 26 sind über ein wellenlängenselektives Filter 28 mit der Übertragungsstrecke 14 verbunden. Das Filter 28 gewährleistet, daß die vom optischen Sender 16 abgegebenen optischen Signale 12 auf die Übertragungsstrecke 14 gelangen, während das Überwachungssignal 24 lediglich den optischen Empfänger 26 erreicht. Der optische Empfänger 18 und der optische Sender 22 sind ebenfalls über ein wellenlängenselektives Filter 30 mit der Übertragungsstrecke 14 verbunden. Das Filter 30 stellt sicher, daß die optischen Signale 12 lediglich den optischen Empfänger 18 erreichen, während das Überwachungssignale 24 in die Übertragungsstrecke 14 eingekoppelt ist.
Vor beziehungsweise hinter der Verstärkereinrichtung 20 ist jeweils ein weiteres wellenlängenselektives Filter 32 beziehungsweise 34 angeordnet. Über das Filter 34 erfolgt eine Auskopplung des Überwachungssignales 24, so daß dieses auf einen optischen Empfänger 36 geführt wird. Der optische Empfänger 36 ist zum Beispiel über einen Modulator 38 mit einem optischen Sender 40 verbunden. In einen Eingang 42 des Modulators 38 sind örtliche Überwachungssignale 44 einkoppelbar, die zu einer Modulation des Überwachungssignales 24 führen. Über das Filter 32 wird das Überwachungssignal 24 wieder in die Übertragungsstrecke 14 eingekoppelt. Der Modulator 38 kann als optischer Modulator oder elektrischer Modulator ausgebildet sein.

Die in der Figur gezeigte Anordnung 10 übt folgende Funktion aus:

Mittels des optischen Senders 16 werden optische Signale 12 übertragen, die von der Verstärkereinrichtung 20 verstärkt werden und vom optischen Empfänger 18 empfangen werden. Die optischen Signale 12 werden hierbei gemeinsam in mehreren optischen Kanälen, im Wellenlängenmultiplex, übertragen. Einer der innerhalb dieses Wellenlängenbereiches zur Verfügung stehenden Kanäle wird nicht zur Übertragung der optischen Signale 12 benutzt. Dieser Kanal dient als Übertragungskanal (OSC - optical supervisory channel) zur Übertragung der Überwachungssignale 24. Der optische Sender 22 und der optische Empfänger 26 sind auf die Übertragung der Überwachungssignale 24 in diesem Kanal ausgelegt. Somit können als optischer Sender 22 und optischer Empfänger 26 Bauelemente verwendet werden, die an sich auch für die Übertragung von optischen Signalen innerhalb der Kanäle des Wellenlängenbereiches der optischen Signale 12 geeignet wären. Es müssen somit keine speziellen optischen Bauelemente, die für Wellenlängen geeignet sind, die außerhalb eines Standardwellenlängenbereiches arbeiten, zur Verfügung gestellt werden.

Die optische Verstärkereinrichtung 20 wirkt nur in Richtung der Übertragung der optischen Signale 12, während in entgegengesetzter Richtung, also in Richtung der Übertragung des Überwachungssignales 24, die Verstärkereinrichtung 20 als Isolator wirkt. Das Übertragungssignal 24 kann somit die Verstärkereinrichtung 20 nicht passieren. Dieses wird über das Filter 34, den optischen Empfänger 36, den Modulator 38, den optischen Sender 40 und das Filter 32 geleitet. Somit kann das Überwachungssignal 24 über die Übertragungsstrecke 14 auch dann übertragen werden, wenn beispielsweise die Verstärkereinrichtung 20 ausfällt.

Das Filter 34, das der Auskopplung des Überwachungssignales 24 dient, muß eine solche Selektion besitzen, daß die im Überwachungskanal übertragenen Überwachungssignale herausfilterbar sind, während die in den weiteren Kanälen des Wellenlängenbereiches übertragenen optischen Signale 12 das Filter 34 in entgegengesetzter Richtung passieren. Gegebenenfalls kann zusätzlich ein Filter 46 (gestrichelt dargestellt) vorgesehen sein, das das Überwachungssignal 24 des Überwachungskanals durchläßt, während weitere Signale in benachbarten Kanälen, die beispielsweise durch Reflexion an das Filter 46 gelangen, nicht durchgelassen werden, so daß die resultierende Selektion vergrößert wird. Bei entsprechenden Pegelverhältnissen und ausreichender Selektion des Filters 46 können die Filter 32 und 34 durch nichtselektive Koppler ersetzt werden.

Um eine Störung der optischen Signale 12 durch das entgegengesetzt übertragene Überwachungssignal 24 auszuschließen, ist die Übersprechdämpfung (Directivity) innerhalb der Filter 28, 30, 32, und 34 so hoch zu wählen, daß sie bei gleichgroßem Pegel der optischen Signale 12 und des Überwachungssignales 24 etwa dem doppelten Wert einer Felddämpfung entspricht.

## Patentansprüche

1. Anordnung zur Übertragung optischer Signale mit einer optischen Übertragungsstrecke, an deren Enden jeweils wenigstens ein optischer Sender und/oder ein optischer Empfänger angeordnet sind, wobei die optische Übertragungsstrecke zum Kompensieren einer Dämpfung der übertragenen optischen Signalen wenigstens eine nur in einer Richtung wirkende Verstärkereinrichtung aufweist, und an den Enden der Übertragungsstrecke ein optischer Sender und/oder ein optischer Empfänger zur Übertragung eines Überwachungssignales angeordnet sind, **dadurch gekennzeichnet, daß** das Überwachungssignal (24) im Wellenlängenbereich der zu übertragenen optischen Signale (12) in entgegengesetzter Richtung zu den optischen Signalen (12) übertragen wird.

2. Anordnung nach Anspruch 1, **dadurch gekennzeichnet, daß** die Übertragungsstrecke (14) mit dem optischen Sender (16) zum Senden der optischen Signale (12) und dem Empfänger zum Empfangen des Überwachungssignales (24) über ein wellenlängenselektives Filter (28) und ein wellenlängenselektives Filter (30) mit dem optischen Empfänger (18) zum Empfang der optischen Signale (12) und dem optischen Sender zum Senden des Überwachungssignales (24) verbunden ist.

3. Anordnung nach einem der vorhergehenden Ansprüche, **dadurch gekennzeichnet, daß** eine Verstärkereinrichtung (20) zwischen zwei wellenlängenselektive Filter (32, 34) geschaltet ist, über die für das Überwachungssignal (24) eine Umgehung um die Verstärkereinrichtung (20) erfolgt.

4. Anordnung nach einem der vorhergehenden Ansprüche, **dadurch gekennzeichnet, daß** der Übertragungskanal zum Übertragen des Überwachungssignales (24) aus den zur Verfügung stehenden Übertragungskanälen zur Übertragung der optischen Signale (12) ausgewählt ist.

5. Anordnung nach einem der vorhergehenden Ansprüche, **dadurch gekennzeichnet, daß** dem Filter (34) im Umleitungsweg des Überwachungssignales (24) um die Verstärkereinrichtung (20) ein Filter (46) nachgeschaltet ist, das lediglich für den Übertragungskanal des Überwachungssignales (24) durchlässig ist.

6. Anordnung nach einem der vorhergehenden Ansprüche, **dadurch gekennzeichnet, daß** die Übersprechdämpfung der Filter (28, 30, 32, 34) bei gleich großem Pegel der optischen Signale (12) und des Überwachungssignales (24) mindestens dem doppelten Wert einer Felddämpfung entspricht.

7. Anordnung nach einem der vorhergehenden Ansprüche, **dadurch gekennzeichnet, daß** das Filter (46) so auf den Pegel und die Wellenlänge des Überwachungssignales (24) ausgelegt ist, daß die Filter (31, 34) durch nichtselektive Koppler ersetzbar sind.

## Claims

1. Arrangement for transmitting optical signals having an optical transmission line at each end of which are arranged at least one optical transmitter and/or one optical receiver, whereby, in order to compensate for attenuation of the transmitted optical signals, the optical transmission line has at least one amplifier device effective in only one direction, and arranged at the ends of the transmission line is an optical transmitter and/or an optical receiver for transmitting a monitoring signal, **characterised in that** the monitoring signal (24) is transmitted in the wavelength region of the optical signals (12) to be transmitted, in the opposing direction to the optical signals (12).

2. Arrangement according to Claim 1, **characterised in that** the transmission line (14) with the optical transmitter (16) for transmitting the optical signals (12) and the receiver for receiving the monitoring signal (24) is linked via a wavelength-selective filter (28) and a wavelength-selective filter (30) to the optical receiver (18) for receiving the optical signals (12) and the optical transmitter for transmitting the monitoring signal (24).

3. Arrangement according to one of the previous claims, **characterised in that** an amplifier device (20) is connected between two wavelength-selective filters (32, 34), via which for the monitoring signal (24), bypassing of the amplifier device (20) takes place.

4. Arrangement according to one of the previous claims, **characterised in that** the transmission channel for transmitting the monitoring signal (24) is selected from the transmission channels available for transmitting the optical signals (12).

5. Arrangement according to one of the previous claims, **characterised in that** a filter (46) is connected downstream of the filter (34) in the bypass route for the monitoring signal (24) round the amplifier device (20), which is transparent only to the transmission channel of the monitoring signal (24).

6. Arrangement according to one of the previous claims, **characterised in that** the crosstalk attenuation of the filters (28, 30, 32, 34) corresponds at equal signal levels of the optical signals (12) and the monitoring signal (24) to at least double the value of a field attenuation.

7. Arrangement according to one of the previous claims, **characterised in that** the filter (46) is so tuned to the level and wavelength of the monitoring signal (24) that the filters (31, 34) are replaceable with non-selective couplers.

## Revendications

1. Dispositif de transmission de signaux optiques avec une voie de transmission optique, aux extrémités de laquelle sont agencés respectivement au moins un émetteur optique et/ou un récepteur optique, la voie de transmission optique, pour compenser un affaiblissement des signaux optiques transmis, présentant au moins un dispositif d'amplification agissant dans une seule direction, et aux extrémités de la voie de transmission, un émetteur optique et/ou un récepteur optique étant agencés pour transmettre un signal de surveillance, **caractérisé en ce que** le signal de surveillance (24) est transmis dans la gamme d'ondes des signaux optiques à transmettre (12) dans une direction opposée aux signaux optiques (12).

2. Dispositif selon la revendication 1, **caractérisé en ce que** la voie de transmission (14) est reliée à l'émetteur optique (16) pour émettre les signaux optiques (12) et au récepteur pour recevoir le signal de surveillance (24) à travers un filtre sélectif en longueur d'onde (28) et un filtre sélectif en longueur d'onde (30) au récepteur optique (18) pour recevoir les signaux optiques (12) et à l'émetteur optique pour émettre le signal de surveillance (24).

3. Dispositif selon l'une quelconque des revendications précédentes, **caractérisé en ce qu'**un dispositif d'amplification (20) est intercalé entre deux filtres sélectifs en longueur d'onde (32, 34) à travers lesquels une dérivation autour du dispositif d'amplification (20) a lieu pour le signal de surveillance (24).

4. Dispositif selon l'une quelconque des revendications précédentes, **caractérisé en ce que** le canal de transmission pour la transmission du signal de surveillance (24) est sélectionné parmi les canaux de transmission disponibles pour la transmission des signaux optiques (12).

5. Dispositif selon l'une quelconque des revendications précédentes, **caractérisé en ce qu'**un filtre (46) est connecté en série avec le filtre (34) sur le chemin de dérivation du signal de surveillance (24) autour du dispositif d'amplification (20), le filtre (46) laissant passer uniquement le canal de transmission du signal de surveillance (24).

6. Dispositif selon l'une quelconque des revendications précédentes, **caractérisé en ce que** l'affaiblissement diaphonique des filtres (28, 30, 32, 34), pour un niveau identique des signaux optiques (12) et du signal de surveillance (24), correspond au moins à deux fois la valeur d'un affaiblissement de champ.

7. Dispositif selon l'une quelconque des revendications précédentes, **caractérisé en ce que** le filtre (46) est étudié pour le niveau et la longueur d'onde du signal de surveillance (24) de telle sorte que les filtres (31, 34) peuvent être remplacés par des coupleurs non sélectifs.
